(19) Europäisches Patentamt
European Patent Office
Office européen des brevets

(11) **EP 4 080 724 A1**

(12) **EUROPÄISCHE PATENTANMELDUNG**

(43) Veröffentlichungstag:
**26.10.2022  Patentblatt 2022/43**

(21) Anmeldenummer: **21169658.8**

(22) Anmeldetag: **21.04.2021**

(51) Internationale Patentklassifikation (IPC):
**H02J 13/00** *(2006.01)*     **G06Q 50/06** *(2012.01)*

(52) Gemeinsame Patentklassifikation (CPC):
**H02J 13/00002; G06Q 10/063; G06Q 50/06;**
H02J 2203/20; H02J 2310/70

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Siemens Aktiengesellschaft**
**80333 München (DE)**

(72) Erfinder:
• **Amthor, Arvid**
  **98631 Grabfeld OT Nordheim (DE)**
• **Dölle, Oliver**
  **06108 Halle (DE)**
• **Langemeyer, Stefan**
  **90489 Nürnberg (DE)**
• **Schütz, Thomas**
  **90762 Fürth (DE)**

(54) **TOPOLOGIEIDENTIFIKATION VON ZÄHLERSTRUKTUREN EINES ENERGIESYSTEMS**

(57)    Die Erfindung betrifft ein Verfahren zur Ermittlung der Topologie von miteinander verbundenen Messeinrichtungen (MEAS) eines Energiesystems, wobei das Energiesystem als Betriebsmittel (BM) Energieerzeuger, Energiespeicher und Energieverbraucher umfasst. Die Messeinrichtungen (MEAS) sind jeweils einem oder mehreren der Betriebsmittel (BM) zugeordnet. Als Eingangsgröße für die Topologieermittlung liegt für jede Messeinrichtung (MEAS) eine von ihr erfasste Messreihe vor, und aus den Messreihen wird mit einer Optimierungsrechnung ermittelt, auf welche Weise die Messeinrichtungen (MEAS) miteinander verbunden sind. Weiterhin betrifft die Erfindung hierzu korrespondierend eine Vorrichtung oder ein System zur Datenverarbeitung, ein Computerprogramm, einen computerlesbaren Datenträger, sowie ein Datenträgersignal.

FIG 2

EP 4 080 724 A1

**Beschreibung**

Die Erfindung betrifft die Ermittlung der Topologie von miteinander verbundenen Messeinrichtungen eines Energiesystems, wobei das Energiesystem als Betriebsmittel Energieerzeuger, Energiespeicher und Energieverbraucher umfasst, und die Messeinrichtungen jeweils einem Betriebsmittel zugeordnet sind.

Energiesysteme mit einer Vielzahl von Energiesystemkomponenten, also einer Vielzahl verschiedener Energieerzeuger, Energiespeicher und Energieverbraucher, sind typischerweise Individuallösungen, so dass diese wegen ihrer Komplexität und Einzigartigkeit einen signifikanten Inbetriebsetzungsaufwand erfordern.

Im laufenden Betrieb werden bislang die einzelnen Betriebsmittel des Energiesystems, beispielsweise Kältemaschinen, Warmwasserspeicher oder Blockheizkraftwerke, häufig durch lokale, heuristische Regeln gesteuert. Aufgrund der Komplexität multimodaler Energiesysteme führen derartige heuristische Betriebsstrategien der einzelnen Betriebsmittel allerdings nicht zu einer optimalen Betriebsführung des Energiesystems.

Eine Verwendung eines übergeordneten, modellbasierten Energiemanagementsystems (EMS) ermöglicht eine verbesserte Betriebsführung des Energiesystems. Hierbei werden durch ein bezüglich der Betriebsmittel des Energiesystems zentrales Energiemanagementsystem möglichst optimale Sollwertvorgaben an untergeordnete Basisregelungen übergeben, welche die verfügbaren Betriebsmittel schließlich auf diese Betriebspunkte einregeln.

Zur Sicherstellung eines effizienten und möglichst fehlerfreien Betriebes des Energiesystems sind Rückmeldungen bezihungsweise Informationen über den aktuellen Systemzustand der einzelnen Betriebsmittel an das Energiemanagementsystem erforderlich. Diese Informationen, beispielsweise eine aktuell umgesetzte Energie von Energieverbrauchern und/oder Energiewandlungsanlagen, und/oder eine energiesysteminterne gewonnene Energie, beispielsweise mittels einer Photovoltaikanlage, werden typischerweise mittels zugehöriger Messeinrichtungen erfasst. Weiterhin sind Eingangsleistungen beziehungsweise Ausgangsleistungen der Betriebsmittel erforderlich, damit eine möglichst genaue Modellierung durch das Energiemanagementsystem ermöglicht wird, insbesondere zur Parameteridentifikation. Dadurch sind jedoch im Gegensatz zu heuristischen Regelungen mehr Messeinrichtungen in Form von Sensoren oder Zählern erforderlich, welche zu einem deutlich höheren Aufwand für die Inbetriebnahme des Energiemanagementsystems führen.

Insbesondere bei komplexen Konzepten mit vielen und flexiblen Anliegern, wie z. B. wechselnden Untermietverhältnissen, gibt es oftmals eine Vielzahl von Submeterstrukturen, d.h. einander unter- und übergeordnete Messeinrichtungen. Für die Installation und den Betrieb dieser Unterzähler ist üblicherweise der Betreiber der Anlage verantwortlich. Dieser vergibt Unteraufträge an verschiedene Planer, Installateure, Inbetriebsetzer und Programmierer. Gerade in Bestandsgebäuden gibt es zwar Zugriff auf die vorhandene Messtechnik, allerdings weicht die Dokumentation der Netzpläne z.T. deutlich vom Ist-Zustand der Installation ab.

Insbesondere in Kältezentralen oder Technikräumen ist deswegen nicht auf Anhieb zu erkennen, welche Unterzähler in welcher Ebene der verteilten Zählerstruktur vorhanden sind. Des Weiteren ist die Benennung der Messwerte und -einrichtungen, z. B. die BACnet Bezeichnung, insbesondere bei Bestandsgebäuden mit verbauter Messtechnik unterschiedlicher Hersteller nicht immer eindeutig oder einheitlich.

Gleichzeitig ist eine Grundvoraussetzung für den Einsatz eines Energiemanagementsystems jedoch, dass die je nach Anwendungsfall notwendigen Messeinrichtungen richtig zugeordnet sind und keine Doppelzählung von Energiemessungen erfolgt .

Eine Herausforderung bei der Installation eines Energiemanagementsystems ist, dass diese Zuordnung der Messeinrichtungen von Bestandssystemen zu Gebäuden, Teilenergiesystemen und Betriebsmitteln manuell erfolgen muss und bei großen Gebäudekomplexen oder mehreren Gebäuden, z.B. auf einem Campus, sehr aufwendig sein kann. Dies führt zu hohen Inbetriebsetzungskosten. Darüber hinaus kann z. B. bei fehlerhaften Bezeichnungen der Messeinrichtungen im Netzwerkprotokoll auch ein fehlerhaftes Modell des zugrunde gelegt werden. Dies ist insbesondere der Fall, wenn keine zusätzliche und zeitaufwändige grafische Auswertung von Messungen durchgeführt wird. Ein ineffizienter oder ggf. fehlerhafter Betrieb des Energiemanagementsystems können die Folge hiervon sein.

Der Erfindung liegt die Aufgabe zugrunde, ein Verfahren aufzuzeigen, mit welchem die Inbetriebnahme eines Energiemanagementsystems vereinfacht wird.

Diese Aufgabe wird durch ein Verfahren mit den Merkmalen des Anspruchs 1 gelöst. Ferner sind Gegenstand der Erfindung eine entsprechende Vorrichtung oder ein System zur Datenverarbeitung, ein entsprechendes Computerprogramm, ein entsprechender computerlesbarer Datenträger, und ein entsprechendes Datenträgersignal. Vorteilhafte Ausgestaltungen und Weiterbildungen sind Gegenstand von Unteransprüchen.

Bei dem erfindungsgemäßen Verfahren wird die Topologie von miteinander verbundenen Messeinrichtungen eines Energiesystems ermittelt. Das Energiesystem umfasst hierbei als Betriebsmittel Energieerzeuger, Energiespeicher und Energieverbraucher. Jede der Messeinrichtungen der zu ermittelnden Topologie ist jeweils einem oder mehreren der Betriebsmittel zugeordnet. Als Eingangsgröße für die Topologieermittlung liegt für jede Messeinrichtung eine von ihr erfasste Messreihe vor. Aus diesen Messreihen wird mit einer Optimierungsrechnung ermittelt, auf welche Weise die Messeinrichtungen miteinander verbunden sind.

Der vorliegenden Erfindung liegt ein Energiesystem mit mehreren Betriebsmitteln zugrunde, wobei jedem der Betriebsmittel eine der Messeinrichtungen zugeordnet ist. Eine Messeinrichtung erfasst hierbei den Verbrauch oder die Erzeugung von Energie des zugeordneten Betriebsmittels. Es ist möglich, dass an eine Messeinrichtung eines oder mehrere Betriebsmittel angeschlossen sind, wobei im letzteren Fall die summierte Energieerzeugung oder -verbrauch erfasst wird.

Das Verfahren basiert auf den tatsächlichen physikalischen Zusammenhängen und dem Verhalten des Energiesystems. Dieses Verhalten wird durch Messreihen der Messeinrichtungen, also zeitliche Reihen von Messwerten wiedergegeben. Die jeweiligen Messwerte können im Hinblick auf Erzeugung und Verbrauch positive und negative Vorzeichen aufweisen. Die Diskretisierung, also der zeitliche Abstand zwischen benachbarten Messwerten, hängt von der Dynamik des Systems ab: dies kann z.B. in der Größenordnung von Sekunden, eine Viertelstunde, eine Stunde, oder auch ein Tag sein.

Das Energiesystem kann z.B. Stromgeneratoren, Kraftwärmekopplungsanlagen, insbesondere Blockheizkraftwerke, Gasboiler, Dieselgeneratoren, Elektrokessel, Wärmepumpen, Kompressionskältemaschinen, Absorptionskältemaschinen, Pumpen, Fernwärmenetzwerke, Energietransferleitungen, Windkrafträder oder Windkraftanlagen, Photovoltaikanlagen, Biomasseanlagen, Biogasanlagen, Müllverbrennungsanlagen, industrielle Anlagen, konventionelle Kraftwerke und/oder dergleichen, als Betriebsmittel umfassen.

In Weiterbildung der Erfindung handelt es sich bei zumindest einer der Messeinrichtungen um eine gemeinsame Messeinrichtung, deren Messwerte der Summe der Messwerte der an sie angeschlossenen Messeinrichtungen entspricht. Der Anschluss einer Messeinrichtung an eine übergeordnete gemeinsame Messeinrichtung bedeutet, dass die von der betrachteten Messeinrichtung erfassten Messwerte an die übergeordnete Messeinrichtung weitergegeben werden. Somit erfasst eine gemeinsame Messeinrichtung die Gesamterzeugung und/oder den Gesamtverbrauch aller Betriebsmittel der an sie angeschlossenen Messeinrichtungen.

Vorzugsweise gibt die ermittelte Topologie für jede Messeinrichtung an, auf welcher von mehreren Ebenen die jeweilige Messeinrichtung angeordnet ist, wobei an jede gemeinsame Messeinrichtung eine oder mehrere Messeinrichtungen der jeweils darunterliegenden Ebene angeschlossen sind. Es liegt somit ein hierarchisches System von Messeinrichtungen vor, wobei auf der untersten Ebene keine Messeinrichtung angeordnet ist. Auf den über der untersten Ebene gelegenen Ebenen können sowohl gemeinsame, als auch nicht-gemeinsame Messeinrichtungen angeordnet sein. Die gemeinsame Messeinrichtung auf der obersten Ebene kann dann ein Netzanschlusspunkt sein, an welchem das Energiesystem an ein Energienetz angeschlossen ist, welches nicht Teil des Energiesystems ist.

Besonders vorteilhaft ist es, wenn bei der Optimierungsrechnung eine Zielfunktion eingesetzt wird, die einen Fehler zwischen der realen Topologie und einer modellierten Topologie angibt. Die modellierte Topologie stellt eine gedachte Verbindung der Messeinrichtungen untereinander dar. Durch Variation der Modellierung kann eine Minimierung der Zielfunktion durchgeführt werden. Das dem Minimum entsprechende Modell kann dann als Ergebnis ausgegeben werden.

Die Betriebsmittel können elektrische Energie und/oder thermische Energie, also Wärme und/oder Kälte, erzeugen, speichern oder verbrauchen. Die Messeinrichtungen sind entsprechend der jeweiligen Energieform ausgestaltet. Grundsätzlich ist die Erfindung auch auf andere Bilanzen anwendbar, z.B. hydraulische Netze oder Wasserstoffnetze.

Einer Ausgestaltung der Erfindung gemäß wird nach erfolgter Topologieermittlung eine weitere Topologieermittlung durchgeführt, und bei der weiteren Topologieermittlung wird das Ergebnis der erfolgten Topologieermittlung ausgeschlossen. Dies hat den Vorteil, dass verschiedene Lösungen zur Verfügung stehen, welche miteinander und/oder mit der realen Topologie verglichen werden können. Diese mehreren Lösungen können bei dem Inbetriebsetzer des Energiemanagementsystems zur Verfügung gestellt werden, so dass dessen Tätigkeit effizienter ablaufen kann.

Bei dem erfindungsgemäßen Verfahren zur Inbetriebnahme eines Energiemanagementsystems wird ein Modell des zu betreibenden Energiesystems vorgegeben, dessen Topologie der Messeinrichtungen durch ein Verfahren wie oben beschrieben ermittelt wurde. Es findet somit zunächst die Ermittlung der Topologie statt, dann die Inbetriebnahme eines Energiemanagementsystems mit der Vorgabe der ermittelten Topologie an das Energiemanagementsystem statt, und im Anschluss erfolgt der Betrieb des Energiemanagementsystems unter Zugrundelegung der ermittelten und vorgegebenen Topologie.

Das erfindungsgemäße Verfahren und/oder eine oder mehrere Funktionen, Merkmale und/oder Schritte des erfindungsgemäßen Verfahrens und/oder einer seiner Ausgestaltungen können computergestützt ablaufen. Z. B. kann das erfindungsgemäße Verfahren durch ein Modul eines Energiemanagementsystems durchgeführt werden, oder durch ein von ihm unabhängiges Computerprogramm.

Im Folgenden wird die Erfindung anhand eines Ausführungsbeispiels näher erläutert. Dabei zeigen:

Figur 1:    eine Automatisierungspyramide mit einem Energiemanagementsystemen,

Figur 2:    einen Ausschnitt aus einem Energiesystem,

Figur 3:     ein Energiesystem.

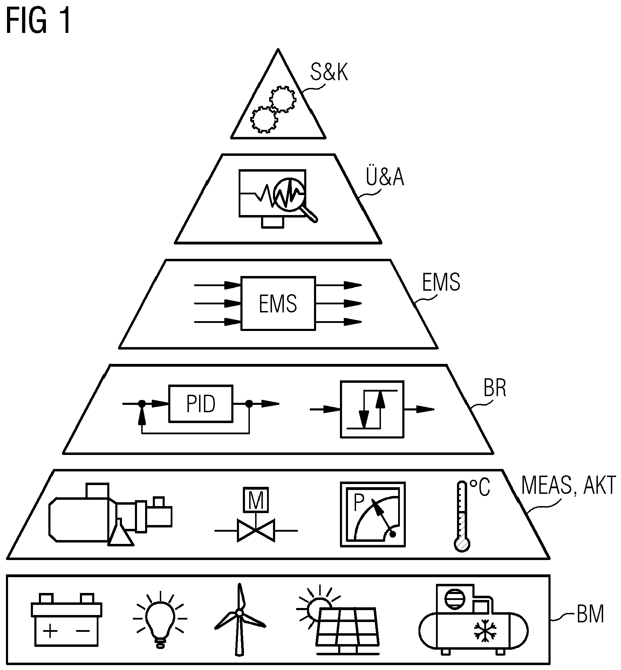

Die im folgenden beschriebene Vorgehensweise soll die Inbetriebnahme eines Energiemanagementsystems erleichtern. Figur 1 zeigt die Einbindung des Energiemanagementsystems EMS in eine Automatisierungspyramide. In der untersten Schicht befinden sich die Betriebsmittel BM. Hierbei handelt es sich um Energieerzeuger, Energieverbraucher und Energiespeicher. Diese können multimodal sein, d.h. sie können sich auf verschiedene Energiearten beziehen, insbesondere auf thermische und elektrische Energie. In Figur 1 sind hierzu beispielhaft - von links nach rechts gesehen - ein Batteriespeicher, ein Energieverbraucher, ein Energieerzeuger in Form einer Windkraftanlage und einer Photovoltaikanlage, sowie eine Kältemaschine gezeigt.

Auf der über den Betriebsmitteln BM liegenden Schicht befinden sich Sensoren MEAS und Aktoren AKT, welche Messungen an den Betriebsmitteln BM vornehmen bzw. diese ansteuern. In Figur 1 sind hierzu beispielhaft - von links nach rechts gesehen - als Aktoren AKT ein Motor und ein Ventil dargestellt, und als Sensoren MEAS ein elektrisches Leistungsmessgerät und ein Temperaturmessgerät. Über den Sensoren MEAS und Aktoren AKT befindet sich die untergeordnete Basisregelung BR, wobei beispielhaft ein kontinuierlicher Regler in Form eines PID-Reglers und ein Zweipunktregler gezeigt sind. Diese regeln die Betriebsmittel BM über die Aktoren AKT auf Betriebspunkte ein.

Das Energiemanagementsystems EMS dient der Betriebsführung des Gesamtsystems, welches durch die verschiedenen Betriebsmittel BM gebildet wird. Letztendlich gilt es, zu entscheiden, wie die Betriebsmittel BM einzusetzen sind. Aufgrund der Dynamik eignet sich hierfür der Einsatz intelligenter Algorithmen. Denn je volatiler Systemparameter sind, desto schlechter funktioniert eine Steuerung mittels einmalig festgelegter Vorgaben. Diese Dynamik äußert sich z.B. in sich ändernden Energiepreisen oder in der Energieerzeugung durch erneuerbare Energien, welche starken zeitlichen Schwankungen unterliegt. Hierzu gibt das Energiemanagementsystemen EMS von ihm ermittelte Sollwertvorgaben an die untergeordnete Basisregelung BR. Für die Überwachung und Analyse Ü&A, sowie für die Strategie und Konzeption S&K des Energiemanagementsystems EMS sind die beiden obersten Schichten der Pyramide zuständig.

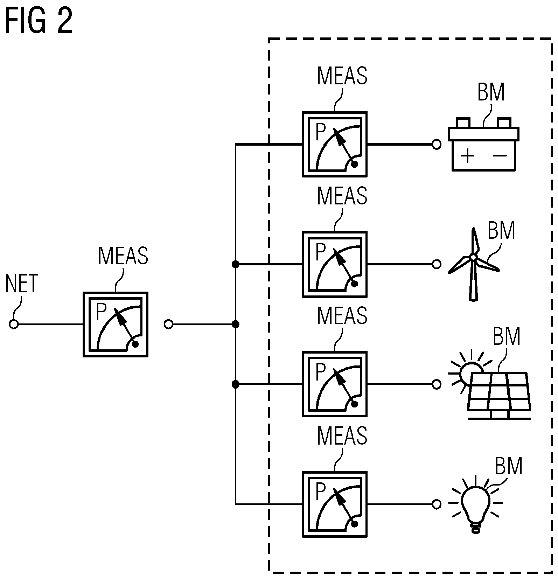

Das Energiemanagementsystem EMS ist modellbasiert, d.h. es basiert auf einem Modell des zu betreibenden Energiesystems, welches eine logische Anordnung der Betriebsmittel BM beinhaltet. Figur 2 zeigt einen Ausschnitt eines solchen Modells eines Energiesystems mit mehreren Betriebsmitteln BM, und zwar - von oben nach unten gesehen - einem Batteriespeicher, einer Windkraftanlage, einer Photovoltaikanlage, sowie einem Energieverbraucher. In der Figur 2 und auch im Folgenden wird nur die elektrische Energie betrachtet; das beschriebene ist auf andere Energiearten und auch auf die gemischte Anwendung verschiedener Energiearten übertragbar. Jedem der Betriebsmittel BM ist eine elektrische Leistungsmesseinrichtung MEAS zugeordnet, wobei die Messeinrichtungen MEAS die jeweilige Energieerzeugung oder den Energieverbrauch, beispielsweise über Leistungsverläufe, in Form eines Messsignals erfasst. Abweichend zur Darstellung in der Figur 2 muss nicht jedem einzelnen der Betriebsmittel BM eine elektrische Leistungsmesseinrichtung MEAS zugeordnet sein. Es kann vielmehr eine Aggregation derart erfolgen, dass eine Leistungsmesseinrichtung MEAS den kumulierten Energieverbrauch mehrerer Verbraucher erfasst oder die kumulierte Energieerzeugung mehrerer Erzeuger. Dementsprechend kann z.B. die Glühbirne in Figur 2 für alle Energieverbraucher innerhalb eines Gebäudes stehen, oder die Photovoltaikanlage für eine Anlage bestehend aus mehreren Einzelphotovoltaikanlagen. In der Darstellung der Figur 1 werden die von den Messeinrichtungen MEAS erfassten Messwerte nach oben gemeldet, so dass sie dem Energiemanagementsystem EMS vorliegen.

Zusätzlich zu den Messeinrichtungen MEAS, die jeweils den Betriebsmitteln BM zugeordnet sind, ist eine gemeinsame Messeinrichtung MEAS - links in der Figur - vorhanden. Diese gemeinsame Messeinrichtung MEAS erfasst ein gemeinsames Messsignal, d.h. eine Gesamtenergiegewinnung oder einen Gesamtenergieverbrauch aller Betriebsmittel BM, welche zu Messeinrichtungen MEAS gehören, die an die gemeinsame Messeinrichtung MEAS angeschlossenen sind. Das gemeinsame Messsignal kann wiederum in Form eines Leistungsverlaufes vorliegen.

Die gemeinsame Messeinrichtung MEAS kann an den Netzanschlusspunkt NET des Energiesystems angeschlossen sein, d.h. an eine Einrichtung, bei welcher elektrische Energie in ein übergeordnetes, z.B. öffentliches, Stromnetz eingespeist oder von dort entnommen wird. Alternativ kann die gemeinsame Messeinrichtung MEAS auch an eine weitere Messeinrichtung angeschlossen sein. In diesem Fall liegt ein Energiesystem mit mehreren Ebenen vor.

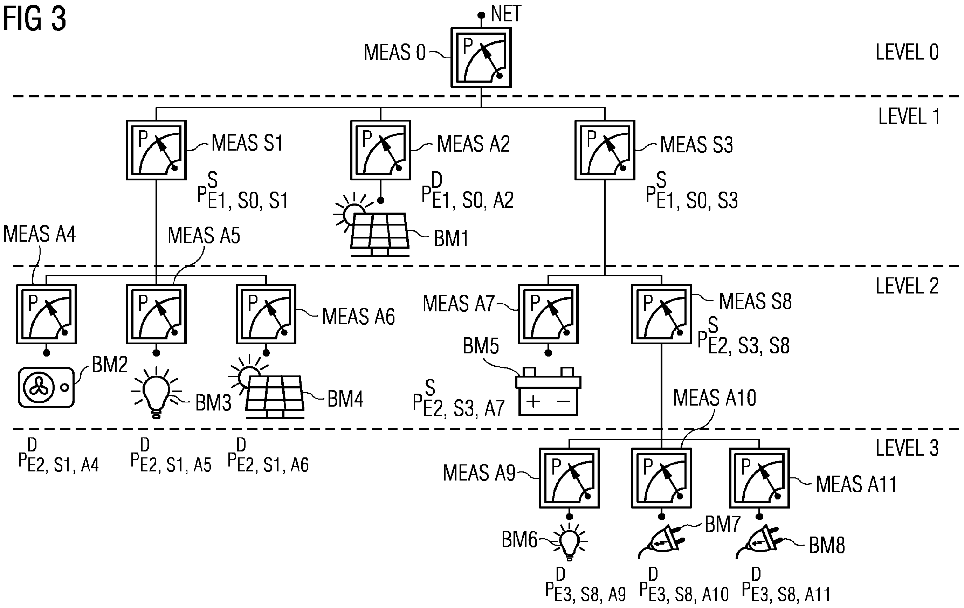

Figur 3 zeigt ein solches Energiesystem mit den vier Ebenen LEVEL 0, LEVEL 1, LEVEL 2 und LEVEL 3. Hierbei kann es sich z.B. um das Energiesystem eines Campus mit mehreren Gebäuden handeln. Auf der obersten Ebene LEVEL 0 liegt der Netzanschlusspunkt NET und die Messeinrichtung MEAS 0, welche eine gemeinsame Messeinrichtung für die untergeordnete Ebene LEVEL1 darstellt. Auf dieser darunterliegenden Ebene LEVEL 1 befinden sich drei Messeinrichtungen MEAS S1, MEAS A2, MEAS S3, wobei es sich bei der Messeinrichtung MEAS S1 um den Gebäudezähler eines ersten Gebäudes handelt, also eine gemeinsame Messeinrichtung, welche die Gesamtenergiegewinnung oder den Gesamtenergieverbrauch eines gesamten Gebäudes erfasst. Ebenso handelt es sich bei der Messeinrichtung MEAS S3 um den Gebäudezähler eines zweiten Gebäudes. Die Messeinrichtung MEAS A2 hingegen ist zuständig für die Erfassung von Energiegewinnung oder Energieverbrauch eines Direktanschlusses, und zwar des Betriebsmittels BM1 in Form einer Photovoltaikanlage.

Jedes Gebäude wiederum kann mehrere Anlieger, z.B. verschiedene Firmen, haben, wobei jedem Anlieger eine eigene Messeinrichtung zugeordnet ist, was auf der Ebene LEVEL 2 dargestellt ist. So gehören zu dem ersten Gebäude die drei Messeinrichtungen MEAS 4A, welche dem Betriebsmittel BM2 in Form einer Klimaanlage zugeordnet ist, sowie MEAS A5, welche dem Betriebsmittel BM3 in Form eines Verbrauchers zugeordnet ist, und MEAS A6, welche dem Betriebsmittel BM4 in Form einer Photovoltaikanlage zugeordnet ist. Ferner gehören zu dem zweiten Gebäude die beiden Messeinrichtungen MEAS A7, welche dem Betriebsmittel BM5 in Form eines Energiespeichers zugeordnet ist, und MEAS S8, welche als gemeinsame Messeinrichtung die Gesamtenergiegewinnung oder den Gesamtenergieverbrauch der an sie angeschlossenen Betriebsmittel der darunter liegenden Ebene LEVEL3 erfasst. Schließlich können für die Anlieger der Ebene LEVEL2 mehrere Subzähler, dargestellt als Messeinrichtungen der Ebene LEVEL3, vorhanden sein. So sind an die Messeinrichtung MEAS S8 als gemeinsame Messeinrichtung die Messeinrichtungen MEAS A9, MEAS A10, MEAS A11, jeweils zuständig für einen Verbraucher BM6 bzw. BM7 bzw. BM8 angeschlossen.

Es versteht sich, dass die Anzahl der Ebenen, Messeinrichtungen und Betriebsmittel in realen Energiesystemen üblicherweise größer als in Figur 3 dargestellt ist. Komplexe Energiesysteme, welche sich besonders für den Einsatz eines Energiemanagementsystems eignen, dienen z.B. der Energieversorgung von Flughäfen, Fabriken oder ganzer Stadtteile.

Ist für ein Energiesystem ein Energiemanagementsystem vorgesehen, so ist insbesondere bei der Initialisierung oder Inbetriebnahme sicherzustellen, dass die Topologie der Messeinrichtungen, d.h. die Verbindungen der verschiedenen Messeinrichtungen untereinander, korrekt im Modell des Energiesystems erfasst ist. Eine händische Erfassung der Topologie würde viel Zeit in Anspruch nehmen und einen hohen personellen Einsatz erfordern. Denn oftmals handelt es sich bei dem Energiesystem um eine über längere Zeit gewachsene Struktur ohne einheitliche oder vollständige oder korrekte Dokumentation. Würde das Energiemanagementsystem basierend auf einer fehlerhaften, die Realität nicht korrekt abbildenden Topologie aufgesetzt, so kann dies zu erheblichen Mehrkosten und auch zu einer fehlerhaften Inbetriebnahme führen.

Um eine händische Ermittlung der Beziehungen zwischen den verschiedenen Messeinrichtungen unnötig zu machen, ist eine automatisierte Lösung für das Auffinden der Systemkonfiguration der Messeinrichtungen auf Basis von Messkampagnen wünschenswert. Dies würde während der Inbetriebsetzungsphase die Kosten für den Einbau eines Energiemanagementsystems im Bestandsbau deutlich senken.

Hierzu wird ein Optimierungsverfahren eingesetzt, welches automatisch die Topologie der Messeinrichtungen des Energiesystems ermittelt. Hierbei wird die folgende Nomenklatur verwendet:

- 

$$P^S_{B_t S_i S_j}(t)$$

  beschreibt die von der Messeinrichtung MEAS Sj zur Zeit t gemessene Leistung. Diese Messeinrichtung MEAS Sj ist ein Summenzähler, verdeutlicht durch das hochstellte S, also eine gemeinsame Messeinrichtung, auf Ebene l und an die Messeinrichtung MEAS Si, ebenfalls ein Summenzähler, und zwar auf der darüberliegenden Ebene(1-1), angeschlossen.

- 

$$P^D_{B_t S_i A_j}(t)$$

  beschreibt die von der Messeinrichtung MEAS Aj zur Zeit t gemessene Leistung. Diese Messeinrichtung MEAS Aj ist ein Direktanschluss, verdeutlicht durch das hochstellte D, auf Ebene 1 und an Messeinrichtung MEAS Si, ein Summenzähler, und zwar auf der darüberliegenden Ebene (1-1), angeschlossen.

- Der Netzanschlusspunkt NET wird als Summenzähler MEAS 0 auf Ebene 0 bezeichnet; die von ihm zum Zeitpunkt t gemessene Leistung ist $P_{PCC}(t)$.

Bevor die rechnerische Optimierung zur Ermittlung der Topologie durchgeführt werden kann, erfolgen Messungen der von allen Messeinrichtungen des Energiesystems erfassten Leistungen über einen bestimmten Zeitraum. Dies bedeutet, dass Messergebnisse von all denjenigen Messeinrichtungen vorliegen müssen, welche Teil der zu ermittelnden Topologie sind. Die Anzahl der Messeinrichtungen wird im Folgenden mit N bezeichnet. Das Energiesystem soll keine weiteren elektrischen Quellen und Senken aufweisen, welche mit den erfassten Messeinrichtungen direkt oder indirekt verbunden sind. Bei den Messungen ist darauf zu achten, dass die Vorzeichen konsistent verwendet werden, d.h. der Verbrauch wird mit positivem und die Erzeugung mit negativem Vorzeichen belegt, oder umgekehrt.

Es wird vorausgesetzt, dass die Messeinrichtung MEAS 0 am Netzanschlusspunkt NET bekannt und korrekt zugeordnet ist. D.h. eines der Messsignale kann zutreffenderweise als $P_{PCC}(t)$ angesehen werden.

Über die topologische Anordnung der anderen Messeinrichtungen muss keine Kenntnis vorhanden sein. Sollte für eine oder mehrere Messeinrichtungen die Zuordnung zu über- und untergeordneten Messeinrichtungen bekannt sein, so kann dies in das im folgende beschriebene Gleichungssystem eingegeben werden. Auf diese Weise kann eine schnellere oder zutreffendere Ermittlung der restlichen Topologie erfolgen.

Für die Bestimmung der Dauer der Messung gilt, dass jede Messeinrichtung nicht für den gesamten Betrachtungszeitraum den Wert Null oder einen anderen konstanten Wert liefern soll, d.h. es soll im Energiesystem eine ausreichende Anregung während des Zeitraums der Messungen vorhanden sein. Dies bedeutet, dass eine ausreichende Anzahl von verschiedenen Messwerten ungleich Null vorliegen sollte. Auch eine ausreichende Dynamik der Messwerte sollte vorhanden sein, d.h. es sollten ausreihend verschiedene Messwerte pro Messeinrichtung erfasst werden. Außerdem soll der Abruf der Signale der verschiedenen Messeinrichtungen zumindest nahezu synchron erfolgen, d.h. der oben genannte Zeitpunkt t der Messwerte soll für alle Messeinrichtungen der gleiche sein. Die genannten Bedingungen ermöglichen eine eineindeutige Zuordnung der Messeinrichtung zu ihrer topologischen Lage.

Eine konkrete Bestimmung der Dauer der Messung hängt u.a. von der Größe des Energiesystems ab.

Es ist auch möglich, bereits bestehende Messwerte zu verwenden, so dass nicht eigens für die Ermittlung der Topologie Messungen durchzuführen sind. Üblicherweise sind in so genannten brown field Anwendungen, d.h. bei bereits in Betrieb genommenen Energiesystemen, ausreichend Messwerte gespeichert, die der im Folgenden beschriebenen Berechnung zugrunde gelegt werden können.

Es liegen also entweder nach Abschluss eigens hierfür durchgeführter Messungen oder aus in der Vergangenheit gespeicherten Daten als Eingangsgrößen des Optimierungsmodells Zeitreihen für $P_{PCC}(t)$ und $P_j(t)$ vor. Es ist nicht notwendig, vor der Optimierungsrechnung schon festzulegen, welche Messeinrichtungen auf welcher Ebene sind oder wie viele von ihnen Summenzähler oder Direktanschlüsse darstellen. Diese Information ergibt sich automatisch als Ergebnis der Optimierung. Das Ergebnis der rechnerischen Topologieermittlung beinhaltet für jede Messeinrichtung, auf welcher Ebene sie sich befindet, ob es sich um einen Direktanschluss oder einen Summenzähler handelt, und welche Messeinrichtungen miteinander verbunden sind.

Das Optimierungsproblem wird wie folgt formuliert:

$$\min \sum_{t}\left( \varepsilon_{PCC}^{+}(t) + \varepsilon_{PCC}^{-}(t) + \sum_{l=1}^{L}\sum_{i=0}^{N}\sum_{j\in\{1..N\}\setminus i}\left[ \varepsilon_{B_l S_i S_j}^{+}(t) + \varepsilon_{B_l S_i S_j}^{-}(t)\right]\right) \qquad (1)$$

Diese Formel (1) beschreibt die zu minimierende Zielfunktion. Die Größe L ist hierbei die Anzahl der Ebenen. Diese Größe wird vorgegeben, indem die maximale Anzahl an vorhandenen Ebenen abgeschätzt wird. Wenn die sich als Ergebnis der Optimierung ergebende Anzahl an Ebenen kleiner ist, sind in diesem Ergebnis manche Ebenen nicht mit Messeinrichtungen belegt. Da L den möglichen mathematischen Lösungsraum erhöht, sollte es nicht unrealistisch groß gewählt werden. $\varepsilon_{PCC}^{+}(t)$ steht für die positive Abweichung des Messwertes bei der Messeinrichtung am Netzanschlusspunkt, verglichen mit dem sich aus dem Modell ergebenden Wert. Analog steht $\varepsilon_{PCC}^{-}(t)$ für die Abweichungen in negativer Richtung.

Beide Größen nehmen definitionsgemäß keine negativen Werte an:

$$\varepsilon_{PCC}^{+}(t),\ \varepsilon_{PCC}^{-}(t) \geq 0 \qquad (2)$$

Dieser Vergleich zwischen Messwert $P_{PCC}(t)$ und sich aus dem Modell ergebenden Wert $\overline{P}_{PCC}(t)$ kann somit formuliert werden als:

$$P_{PCC}(t) - \overline{P}_{PCC}(t) = \varepsilon_{PCC}^{+}(t) - \varepsilon_{PCC}^{-}(t) \qquad \forall t \qquad (3)$$

Der sich aus dem Modell ergebende Wert $\overline{\overline{P}}_{PCC}(t)$, also die Modellierung der Leistung am Netzanschlusspunkt, kann als Summe über die modellierte Leistung aller Messeinrichtungen Sj und Aj, die gemäß dem Modell der Ebene 1 zugewiesen und somit an den Summenzähler S0 angeschlossen sind, geschrieben werden:

$$\bar{P}_{PCC}(t) = \sum_{j=1}^{N} \left[ P^S_{B_1 S_0 S_j}(t) + P^D_{B_1 S_0 A_j}(t) \right] \qquad \forall t \qquad (4)$$

Die modellierten Leistungen der an den Summenzähler S0 angeschlossenen Messeinrichtungen Sj und Aj

$$P^S_{B_1 S_0 S_j}(t)$$

bzw.

$$P^D_{B_1 S_0 A_j}(t),$$

und ebenso im allgemeinen die entsprechenden modellierten Leistungen

$$P^S_{B_i S_i S_j}(t)$$

und

$$P^D_{B_i S_i A_j}(t)$$

aller Messeinrichtungen, werden folgendermaßen aus den Messwerten berechnet:

$$P^S_{B_i S_i S_j}(t) = x^S_{B_i S_i S_j} \cdot P_j(t) \qquad \forall l, i, j, t \quad \text{mit} \quad i \neq j \qquad (5a)$$

$$P^D_{B_i S_i A_j}(t) = x^D_{B_i S_i A_j} \cdot P_j(t) \qquad \forall l, i, j, t \quad \text{mit} \quad i \neq j \qquad (5b)$$

Hierbei beschreibt Formel (5a) einen Summenzähler, und Formel (5b) einen Direktanschluss.
Bei

$$x^S_{B_i S_i S_j}$$

und

$$x^D_{B_i S_i A_j}$$

handelt es sich um Variablen des Modells. Diese stellen die Zuordnung zwischen der Messeinrichtung mit Index j und seiner Positionierung innerhalb der Topologie dar.
Jede Messeinrichtung j darf bei der Modellierung nur einer einzigen Position innerhalb der Topologie, und nur entweder einem Direktanschluss oder einem Summenzähler zugewiesen werden. Die jeweilige Variable

$$x^S_{E_l S_i S_j}, \quad x^D_{E_l S_i A_j}$$

weist also für eine bestimmte Messeinrichtung j einmal den Wert 1, ansonsten den Wert Null auf. Dies wird durch die folgenden Bedingungen sichergestellt:

$$x^S_{E_l S_i S_j}, x^D_{E_l S_i A_j} \in \{0; 1\} \qquad \forall l, i, j \quad \text{mit} \qquad (6a)$$
$$i \neq j$$

$$1 = \sum_{l=1}^{L} \sum_{i=0}^{N} \sum_{j \in \{1 \ldots N\} \setminus i} \left[ x^S_{E_l S_i S_j} + x^D_{E_l S_i A_j} \right] \qquad \forall j \qquad (6b)$$

In Formel (1) steht

$$e^+_{E_l S_i S_j}(t)$$

für die aufgrund der Modellierung bestehende positive Abweichung bei der Summenzähler-Messeinrichtung Sj auf Ebene 1, welche an die Summenzähler Messeinrichtung Si der übergeordneten Ebene angeschlossen ist. Analog steht

$$e^-_{E_l S_i S_j}(t)$$

für die Abweichungen in negativer Richtung. Beide Größen nehmen definitionsgemäß keine negativen Werte an:

$$e^+_{E_l S_i S_j}(t), \quad e^-_{E_l S_i S_j}(t) \geq 0 \qquad \forall l, i, j, t \quad \text{mit} \qquad (7)$$
$$i \neq j$$

Diese Abweichung ergibt sich gemäß Gleichung (8) folgendermaßen:

$$P^S_{E_l S_i S_j}(t) - \sum_{k=1}^{N} \left[ P^S_{E_{l+1} S_j S_k}(t) + P^D_{E_{l+1} S_j A_k}(t) \right] = e^+_{E_l S_i S_j}(t) - e^-_{E_l S_i S_j}(t) \quad \begin{array}{l} \forall l \in \{1 \ldots L-1\} \\ \forall i, j, t \quad \text{mit} \\ i \neq j \end{array} \qquad (8)$$

Durch Formel (1) wird also für jeden Zeitschritt t des Messintervalls für das gesamte Energiesystem der Fehler gegenüber der Messung bestimmt, welcher durch die Modellierung besteht. Mit "Modellierung" ist gemeint, dass jeder Messeinrichtung eine Position innerhalb der Topologie zugewiesen wird, was durch die Belegung von

$$x^S_{E_l S_i S_j}, x^D_{E_l S_i A_j}$$

mit einer einzigen Eins und ansonsten Nullen erfolgt. Durch die Berechnung der Summe aus Formel (1) wird dieses Modell mit den Messwerten verglichen. Das Modell wird so lange variiert, bis das Minimum dieser Summe gefunden ist.

Für die rechnerische Ermittlung des Minimums bzw. der optimalen Lösung können an sich bekannte Algorithmen oder Solver verwendet werden, welche für die gemischt-ganzzahlige lineare Optimierung (englisch MILP: mixed integer linear programming) ausgelegt sind, wie z. B. Gurobi, SCIP. Bei diesen können verschiedene geeignete Methoden eingesetzt werden, z.B. "branch and bound" oder "branch and cut".

Als Ergebnis der Minimierung liegt für jede Messeinrichtung j genau ein

$$x^{S}_{R_l S_l S_l}, x^{D}_{R_l S_l A_l}$$

mit dem Wert 1 vor. Handelt es sich um ein

$$x^{S}_{R_l S_l S_l},$$

welches den Wert 1 aufweist, so ist die jeweilige Messeinrichtung ein Summenanschluss, bei

$$x^{D}_{R_l S_l A_l}$$

ein Direktanschluss. Der Parameter 1 gibt an, auf welcher Ebene sich die Messeinrichtung j im Ergebnis befindet, der Parameter i zeigt, an welche andere Messeinrichtung i die Messeinrichtung j angeschlossen ist.

Um sicher zu stellen, dass es sich bei der gefundenen Lösung um ein korrektes Abbild der realen Topologie handelt, kann folgendermaßen vorgegangen werden:

Das gesamte Vorgehen wird wiederholt. D.h. es erfolgt eine erneute Messung an allen Messeinrichtungen und eine erneute Optimierung mittels Formel (1). Wenn das gleiche Ergebnis erzielt wird, ist dies verlässlich.

Es ist jedoch auch möglich, bei der zweiten Optimierungsrechnung das Ergebnis der ersten Rechnung auszuschließen, also ein anderes Ergebnis zu erzwingen. Die verschiedenen Ergebnisse können dann in Realität mit dem Energiesystem verglichen werden, um zu entscheiden, welche Lösung die zutreffende ist. Für diesen Vergleich können u.a. bestehende Pläne des Energiesystems herangezogen werden.

Nicht nur eine einmalige Optimierungsrechnung durchzuführen, ist deshalb sinnvoll, weil grundsätzlich mit Messfehlern und Rauschen zu rechnen ist. Außerdem könnte es sein, dass das Messintervall zu kurz gewählt war, weshalb die Optimierungsrechnung zwar ein eindeutiges, aber nicht das korrekte Ergebnis geliefert hat. Ferner könnte es sein, dass eine zu geringe Anregung im System vorhanden war, dass also nicht ausreichend unterschiedliche Messwerte vorlagen.

Das abschließend gefundene Ergebnis, d.h. die Topologie des Energiesystems, kann dann für die Inbetriebnahme des Energiemanagementsystems verwendet werden. Hierzu werden die Messeinrichtungen dem Ergebnis der Optimierungsrechnung gemäß allokiert, d.h. im Modell des Energiemanagementsystems gemäß der berechneten Topologie angeordnet.

Dies resultiert in einem deutlich reduzierten Aufwand für die Inbetriebnahme des Energiemanagementsystems, da die Zuordnung der Messeinrichtungen zu den Summenzählern einfach und schnell erfasst wird. Hierfür ist keine Installation zusätzlicher Messgeräte nötig, vielmehr reicht es, Messwerte der bereits existierenden Messeinrichtungen aufzuzeichnen und auszuwerten.

Durch die automatisierte Berechnung basierend auf gemessenen Werten können Fehler bei der Inbetriebnahme vermieden werden. Derartige Fehler können z.B. auftreten, wenn man sich auf fehlerhafte Netzwerkpläne verlässt. Diese würden ansonsten zu einem ineffizienten bzw. ggf. fehlerhaften Betrieb des Energiemanagementsystems führen.

Das in Figur 3 gezeigte Energiesystem beinhaltet nur Komponenten zur Erzeugung, Speicherung und Verbrauch von elektrischer Energie. Das dargestellte Verfahren kann aber auf Messeinrichtungen aller Endenergieformen (Wärme, Strom, Kälte) angewandt werden, solange eine Baumhierarchie mit einem Netzanschlusspunkt vorliegt, so z.B. ein Fernwärmeanschluss, und die oben beschriebenen weiteren Voraussetzungen erfüllt sind. Ferner kann auch ein gemeinsames Optimierungsmodell für alle Endenergieformen verwendet werden. Dies hat den Vorteil, dass im Vorfeld keine Zuordnung der Messeinrichtungen zu den einzelnen Endenergieformen erfolgen muss.

Das beschriebene Verfahren wird von einem Computerprogramm ausgeführt. Als Eingangsgröße wird für jede Messeinrichtung eine Messreihe eingegeben. Ferner wird eine maximale Anzahl L von Ebenen vorgegeben. Das Computerprogramm kann Teil des Energiemanagementsystem-Computerprogramms sein; in diesem Fall kann die ermittelte Topologie direkt vom Energiemanagementsystem verwendet werden. Alternativ kann es sich um ein vom Energiemanagementsystem-Computerprogramm getrenntes Computerprogramm handeln. Dieses kann der Betreiber des Energiemanagementsystems z.B. zu Zwecken der Inbetriebnahme des Energiemanagementsystems leihen.

Die Erfindung wurde voranstehend an einem Ausführungsbeispiel beschrieben. Es versteht sich, dass zahlreiche Änderungen und Modifikationen möglich sind, ohne dass der Rahmen der Erfindung verlassen wird.

**Patentansprüche**

1. Verfahren zur Ermittlung der Topologie von miteinander verbundenen Messeinrichtungen (MEAS) eines Energiesystems, wobei
das Energiesystem als Betriebsmittel (BM) Energieerzeuger, Energiespeicher und Energieverbraucher umfasst,
und die Messeinrichtungen (MEAS) jeweils einem oder mehreren der Betriebsmittel (BM) zugeordnet sind,
als Eingangsgröße für die Topologieermittlung für jede Messeinrichtung (MEAS) eine von ihr erfasste Messreihe vorliegt,
aus den Messreihen mit einer Optimierungsrechnung ermittelt wird, auf welche Weise die Messeinrichtungen (MEAS) miteinander verbunden sind.

2. Verfahren nach Anspruch 1, bei dem
es sich bei zumindest einer der Messeinrichtungen (MEAS) um eine gemeinsame Messeinrichtung (MEAS) handelt,
deren Messwerte der Summe der Messwerte der an sie angeschlossenen Messeinrichtungen (MEAS) entspricht.

3. Verfahren nach Anspruch 2, bei dem
die ermittelte Topologie für jede Messeinrichtung (MEAS) angibt, auf welcher von mehreren Ebenen (LEVEL 0, LEVEL 1, LEVEL 2, LEVEL 3) die jeweilige Messeinrichtung (MEAS) angeordnet ist, wobei an jede gemeinsame Messeinrichtung (MEAS) eine oder mehrere Messeinrichtungen (MEAS) der jeweils darunterliegenden Ebene (LEVEL 1, LEVEL 2, LEVEL 3) angeschlossen sind.

4. Verfahren nach Anspruch 2 oder 3, bei dem auf der obersten Ebene (LEVEL 0) eine gemeinsame Messeinrichtung (MEAS) in Form eines Netzanschlusspunktes (NET) angeordnet ist.

5. Verfahren nach einem der Ansprüche 1 bis 4, bei dem bei der Optimierungsrechnung eine Zielfunktion eingesetzt wird, die einen Fehler zwischen der realen Topologie und einer modellierten Topologie angibt.

6. Verfahren nach Anspruch 5, bei dem
die Ermittlung der Topologie durch Minimierung der Zielfunktion erfolgt.

7. Verfahren nach einem der Ansprüche 1 bis 6, bei dem
die Betriebsmittel (BM) elektrische Energie und/oder thermische Energie erzeugen, speichern oder verbrauchen.

8. Verfahren nach einem der Ansprüche 1 bis 7, bei dem
nach erfolgter Topologieermittlung eine weitere Topologieermittlung durchgeführt wird,
und bei der weiteren Topologieermittlung das Ergebnis der erfolgten Topologieermittlung ausgeschlossen wird.

9. Verfahren zur Inbetriebnahme eines Energiemanagementsystems (EMS), wobei
ein Modell des zu managenden Energiesystems vorgegeben wird,
dessen Topologie der Messeinrichtungen (MEAS) durch ein Verfahren nach den Ansprüchen 1 bis 8 ermittelt wurde.

10. Vorrichtung oder System zur Datenverarbeitung, umfassend Mittel zur Ausführung des Verfahrens nach einem der Ansprüche 1 bis 9.

11. Computerprogramm, umfassend Befehle, die bei der Ausführung des Programms durch einen Computer diesen veranlassen, die Schritte des Verfahrens nach einem der Ansprüche 1 bis 9 auszuführen.

12. Computerlesbarer Datenträger, auf dem das Computerprogramm nach Anspruch 11 gespeichert ist.

13. Datenträgersignal, das das Computerprogramm nach Anspruch 11 überträgt.

FIG 1

FIG 2

# FIG 3

NET

MEAS 0 — LEVEL 0

---

LEVEL 1

MEAS S1 $P^S_{E1, S0, S1}$

MEAS A2 $P^D_{E1, S0, A2}$ — BM1

MEAS S3 $P^S_{E1, S0, S3}$

---

MEAS A4 $P^D_{E2, S1, A4}$

MEAS A5 $P^D_{E2, S1, A5}$

MEAS A6 $P^D_{E2, S1, A6}$ — BM2, BM3, BM4 — LEVEL 2

MEAS A7 $P^S_{E2, S3, A7}$ — BM5

MEAS S8 $P^S_{E2, S3, S8}$

MEAS A10

---

MEAS A9 $P^D_{E3, S8, A9}$ — BM6

$P^D_{E3, S8, A10}$ — BM7

MEAS A11 $P^D_{E3, S8, A11}$ — BM8 — LEVEL 3

EP 4 080 724 A1

**Europäisches Patentamt**
**European Patent Office**
**Office européen des brevets**

# EUROPÄISCHER RECHERCHENBERICHT

Nummer der Anmeldung

EP 21 16 9658

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | PAPPU SATYA JAYADEV ET AL: "Identifying Topology of Low Voltage Distribution Networks Based on Smart Meter Data", IEEE TRANSACTIONS ON SMART GRID, Bd. 9, Nr. 5, 9. März 2017 (2017-03-09), Seiten 5113-5122, XP055848055, USA ISSN: 1949-3053, DOI: 10.1109/TSG.2017.2680542 * Abschnitt IV.B * * Abschnitt III * * Abschnitt II.A * | 1-8, 10-13 | INV. H02J13/00 G06Q50/06 |
| | ----- | | |
| X | ARYA VIJAY ET AL: "Inferring connectivity model from meter measurements in distribution networks", PROCEEDINGS OF THE THE FOURTH INTERNATIONAL CONFERENCE ON FUTURE ENERGY SYSTEMS, E-ENERGY '13, 21. Mai 2013 (2013-05-21), Seiten 173-181, XP055848050, New York, New York, USA DOI: 10.1145/2487166.2487186 ISBN: 978-1-4503-2052-8 Gefunden im Internet: URL:http://conferences.sigcomm.org/eenergy /2013/papers/p15.pdf> * Abschnitt 5 * * Abschnitt 2 * | 1-7,9-13 | |
| | | | **RECHERCHIERTE SACHGEBIETE (IPC)** |
| | | | H02J G06Q |
| | ----- | | |

Der vorliegende Recherchenbericht wurde für alle Patentansprüche erstellt

| Recherchenort | Abschlußdatum der Recherche | Prüfer |
|---|---|---|
| München | 6. Oktober 2021 | Chabas, Julien |